# EUROPÄISCHE PATENTANMELDUNG

(11) **EP 3 064 859 A2**
(43) Veröffentlichungstag der Anmeldung: **07.09.2016**
(21) Anmeldenummer: 16150048.3
(22) Anmeldetag: 04.01.2016
(51) Int. Cl.: F24J 2/05, F24J 2/46

(54) **HYDRAULISCHE KOLLEKTORSTECKVERBINDUNG, HYDRAULISCHE KOLLEKTORSTECKVERBINDUNGSANORDNUNG SOWIE KOLLEKTOR ZUR WÄRMEERZEUGUNG**

(30) Priorität: 04.03.2015 DE 102015203829
(71) Anmelder: Robert Bosch GmbH, 70442 Stuttgart (DE)
(72) Erfinder: Otting, Herbert, 49832 Beesten (DE); Stockmeier, Holger, 48493 Wettringen (DE); Lueke, Wolfgang, 48282 Emsdetten (DE)

(57) **Zusammenfassung**

Die Erfindung betrifft eine hydraulische Kollektorsteckverbindung (30), bevorzugt eine Vakuumröhren-Kollektorsteckverbindung (30), für einen Kollektor (0) einer Kollektoranlage, mit einem Hydrauliksteckverbinder (300) zur hydraulischen Verbindung zweier Sammelleitungen (20), insbesondere von Kollektormodulen (1), wobei der Hydrauliksteckverbinder (300) zwei längsendabschnittsseitige Anschlussabschnitte (305) aufweist, welche innerhalb zweier einander gegenüberliegender Sammelleitungen (20) vorgesehen, insbesondere eingesteckt, sind.

Ferner betrifft die Erfindung eine hydraulische Kollektorsteckverbindungsanordnung (3), bevorzugt eine Vakuumröhren-Kollektorsteckverbindungsanordnung (3) für einen Vakuumröhrenkollektor (0) einer Vakuumröhrenkollektoranlage, mit wenigstens zwei hydraulischen erfindungsgemäßen Kollektorsteckverbindungen (30), wobei die Kollektorsteckverbindungsanordnung (3) eine einzige Montageklammer (400) umfasst, mittels welcher die wenigstens zwei Kollektorsteckverbindungen (30) mechanisch zusammenspannt sind.

## Beschreibung

Die Erfindung betrifft eine hydraulische Kollektorsteckverbindung, bevorzugt eine Vakuumröhren-Kollektorsteckverbindung, für einen Kollektor einer Kollektoranlage. Ferner betrifft die Erfindung eine hydraulische Kollektorsteckverbindungsanordnung, bevorzugt eine Vakuumröhren-Kollektorsteckverbindungsanordnung für einen Vakuumröhrenkollektor einer Vakuumröhrenkollektoranlage. Des Weiteren betrifft die Erfindung einen Kollektor, insbesondere einen Vakuumröhrenkollektor, eine Kollektoranlage oder ein Thermosystem zur Wärmeerzeugung, z. B. für eine Warmwasserbereitung und/oder eine Heizungsunterstützung.

### Stand der Technik

Angesichts steigender Preise für fossile Energieträger und einer schwindenden Akzeptanz der Atomenergie kommt einer Nutzung regenerativer Energien in der Zukunft eine wachsende Bedeutung zu. So nutzt eine thermische (Solar-)Kollektoranlage, wie z. B. eine Vakuumröhrenkollektoranlage, die Sonnenenergie zur Wärmeerzeugung z. B. für eine Warmwasserbereitung und wahlweise auch zur Heizungsunterstützung, wobei solche Anlagen energiesparend und umweltschonend sind. Dies spart wertvolle Brennstoffe ein und schont die Umwelt durch weniger Schadstoffemissionen. In einer Vakuumröhrenkollektoranlage wird nicht nur die direkte Sonnenstrahlung in Wärme umgesetzt, sondern auch die diffuse Sonnenstrahlung kann durch deren Kollektormodule genutzt werden. So wirken an trüben Tagen mit einem hohen Anteil an diffusem Licht noch bis zu 300 W/m² auf einen Kollektor bzw. ein Kollektormodul der Vakuumröhrenkollektoranlage.

Eine Warmwasserbereitung ist eine naheliegende Anwendung für eine solche Anlage. Ein über das gesamte Jahr hinweg im Wesentlichen konstanter Warmwasserbedarf ist gut mit einem solaren Energieangebot kombinierbar. Im Sommer lässt sich der Energiebedarf für die Warmwasserbereitung nahezu vollständig von der Vakuumröhrenkollektoranlage abdecken. Ferner kann eine solche Anlage auch für eine Heizungsunterstützung angewendet werden. Allerdings kann die Anlage hierfür nur dann Wärme abgeben, wenn eine Rücklauftemperatur einer Heizung niedriger ist als eine Temperatur der Vakuumröhrenkollektoranlage. Ideal hierfür sind deshalb großflächige Heizkörper mit niedrigen Systemtemperaturen oder Fußbodenheizungen. Bei entsprechender Auslegung deckt die Vakuumröhrenkollektoranlage einen nicht geringen Anteil der benötigten Gesamt-Jahreswärmeenergie für eine Warmwasserbereitung und eine Heizung ab.

Im Mittelpunkt einer jeden Vakuumröhrenkollektoranlage steht neben einem Speicher- oder Puffersystem ein Vakuumröhrenkollektor bzw. dessen Kollektormodule. Dieser nimmt bzw. diese nehmen die einfallende Sonnenenergie durch Absorber auf und wandelt bzw. wandeln die Energie in Wärme um. Eine die Leitrohre in den Absorbern direkt durchströmende Wärmeträgerflüssigkeit, meist ein Gemisch aus Wasser und einem Frostschutzmittel, erhitzt sich dabei und transportiert die Wärme über Sammelleitungen z. B. zu einem Wärmetauscher, einem Speicher und/oder einem Verbraucher. Alternativ können statt Leitrohren in den Absorbern sogenannte Wärmerohre (Heatpipe, Zwei-Phasen-Thermosiphon) angewendet werden, welche unter einer Nutzung einer Verdampfungswärme eines in den Wärmerohren befindlichen Mediums eine hohe Wärmestromdichte erlauben. Hierbei findet am Vakuumröhrenkollektor bzw. dessen Kollektormodulen ein Wärmetausch zwischen den Wärmerohren und einer entsprechend mit Wärmetauschern ausgestalteten bzw. versehenen Sammelleitung statt.

Bei Vakuumröhrenkollektoren gemäß dem Stand der Technik sind deren Sammelleitungen aus mehreren Teilen gefertigt. Dies sind die Rohrleitung selbst und die daran angebrachten Anschlussteile zum hydraulischen Verbinden mehrerer Sammelleitungen bzw. zum hydraulischen Anschluss der Sammelleitung an einen Hydraulikkreis. Für das hydraulische Verbinden zweier Sammelleitungen gibt es derzeit zwei bevorzugte Anschlusstechniken: eine Klemmringverschraubung oder angelötete bzw. angeschweißte Gewindeteile mit außenliegenden O-Ringdichtungen. Diese Arten der Verbindung zweier Sammelleitungen sind bei der Montage von Kollektormodulen aufwändig und benötigen daher viel Zeit.

### Aufgabenstellung

Es ist eine Aufgabe der Erfindung, eine verbesserte hydraulische Kollektorsteckverbindung, bevorzugt eine verbesserte Vakuumröhren-Kollektorsteckverbindung, für einen Kollektor einer Kollektoranlage anzugeben. Hierbei soll die Kollektorsteckverbindung vergleichsweise einfach aufgebaut und schnell zu montieren sein. Ferner soll eine Kollektorsteckverbindung zweier Sammelleitungen oder ein hydraulischer Anschluss einer Sammelleitung mittels der Kollektorsteckverbindung einfach zu bewerkstelligen sein. Des Weiteren ist es eine Aufgabe der Erfindung, einen verbesserten Kollektor, insbesondere einen verbesserte Vakuumröhrenkollektor, eine verbesserte Kollektoranlage und ein verbessertes Thermosystem anzugeben.

### Offenbarung der Erfindung

Die Aufgabe der Erfindung ist mittels einer hydraulischen Kollektorsteckverbindung, bevorzugt einer Vakuumröhren-Kollektorsteckverbindung, für einen Kollektor einer Kollektoranlage, gemäß Anspruch 1; mittels einer hydraulischen Kollektorsteckverbindungsanordnung, bevorzugt einer Vakuumröhren-Kollektorsteckverbindungsanordnung für einen Vakuumröhrenkollektor einer Vakuumröhrenkollektoranlage; und mittels einem Kollektor, insbesondere einem Vakuumröhrenkollektor, einer Kollektoranlage oder einem Thermosystem zur Wärmeerzeugung, z. B. für eine Warmwasserbereitung und/oder eine Heizungsunterstützung, gemäß Anspruch 12 gelöst. - Vorteilhafte Weiterbildungen, zusätzliche Merkmale und/oder Vorteile der Erfindung ergeben sich aus den abhängigen Ansprüchen und der folgenden Beschreibung.

Die erfindungsgemäße hydraulische Kollektorsteckverbindung umfasst einen Hydrauliksteckverbinder zur hydraulischen Verbindung zweier Sammelleitungen, insbesondere von Kollektormodulen, wobei der Hydrauliksteckverbinder zwei längsendabschnittsseitige Anschlussabschnitte aufweist, welche innerhalb zweier einander gegenüberliegender Sammelleitungen vorgesehen, insbesondere eingesteckt, sind. Die beiden Sammelleitungen können an ihren einander gegenüberliegenden Enden jeweils eine Montageeinrichtung aufweisen, welche mit einer Montageeinrichtung des Hydrauliksteckverbinders verbunden sind.

Der erfindungsgemäße Hydrauliksteckverbinder dient dabei ferner einer mechanischen Verbindung der beiden Sammelleitungen oder einer mechanischen Verbindung einer Sammelleitung mit einem Hydraulikkreis. Hierbei kann eine Sammelleitung oder es können die Sammelleitungen als VakuumröhrenkollektorSammelleitungen ausgebildet sein. Ein Mittenabschnitt einer Sammelleitung kann als ein Leitrohrabschnitt oder ein Wärmerohrabschnitt ausgebildet sein. Die Anschlussabschnitte des Hydrauliksteckverbinders können innen im Wesentlichen miteinander fluchten. Ferner weist ein Anschlussabschnitt des Hydrauliksteckverbinders an seinem freien Ende bevorzugt eine Fase oder einen Zentrierbund auf.

Die Kollektorsteckverbindung kann eine Montagevorrichtung aufweisen, welche die Montageeinrichtung der einen Sammelleitung, die Montageeinrichtung des Hydrauliksteckverbinders sowie die Montageeinrichtung der zweiten Sammelleitung mechanisch fest verbindet. Die beiden Sammelleitungen können an ihren einander gegenüberliegenden Enden jeweils einen Flansch aufweisen, zwischen welchen ein Außenbund des Hydrauliksteckverbinders aufgenommen ist.

Die Kollektorsteckverbindung kann ferner eine Montageklammer umfassen, mittels welcher der Flansch der einen Sammelleitung, der Außenbund des Hydrauliksteckverbinders sowie der Flansch der zweiten Sammelleitung mechanisch zusammenspannt sind. Hierbei umgreift die Montageklammer die beiden Flansche der Sammelleitungen mit dem dazwischen befindlichen Außenbund des Hydrauliksteckverbinders in Umfangsrichtung der Sammelleitungen wenigstens teilweise oder wenigstens teilweise an einem Umfangsabschnitt, und spannt diese bevorzugt mit einer mechanischen Vorspannung axial zusammen.

Die Montageklammer kann als eine im Wesentlichen u-förmige und/oder im Wesentlichen starre Montageklammer ausgebildet sein, welche über die Montageeinrichtungen schiebbar ist und mittels zweier bevorzugt innenliegender Seiten die betreffenden Montageeinrichtungen axial zusammenhält bzw. -presst. Ferner kann die Montageklammer als eine im Wesentlichen o-förmige Montageklammer mit zwei gegeneinander bewegbaren, insbesondere schwenkbaren, und am Umfang miteinander verrastbaren Schenkeln, ausgebildet sein, welche über den Montageeinrichtungen montierbar ist und mittels zweier bevorzugt innenliegender Seiten die betreffenden Montageeinrichtungen axial zusammenhält bzw. -presst.

Hier kann man schon erkennen, dass eine einzelne Montageklammer nicht nur eine einzige Kollektorsteckverbindung mechanisch fest verbinden kann, sondern eine Mehrzahl von Kollektorsteckverbindungen einer hydraulischen Kollektorsteckverbindungsanordnung (siehe unten) gemeinsam verbinden kann. Die beiden innenliegenden Seiten der Montageklammer, welche die betreffenden Montageeinrichtungen axial zusammenhalten bzw. -pressen, sind bevorzugt die innenliegenden Seiten zweier Schenkel eines u-förmigen Profils einer Materiallage der Montageklammer, welche in Umfangsrichtung um die Montageeinrichtungen umläuft.

Die Sammelleitungen können in jeweils einem Anschlussabschnitt eine darin vorgesehene, insbesondere eine darin ausgeformte, Dichtsitzeinrichtung zur inneren Aufnahme jeweils einer Dichtung aufweisen. Hierbei kann die jeweilige Dichtsitzeinrichtung bevorzugt wenigstens einen Dichtungssitz zur inneren Aufnahme der Dichtung aufweisen, der als eine in der betreffenden Sammelleitung vollständig umlaufende Innennut ausgebildet ist, wobei die Innennut außen an der Sammelleitung bevorzugt als ein umlaufender Vorsprung ausgebildet ist. Die Anschlussabschnitte des Hydrauliksteckverbinders können in die Anschlussabschnitte der gegenüberliegenden Sammelleitungen eingesteckt sein, wobei die Dichtungen der Dichtsitzeinrichtungen bzw. der Dichtungssitze der Sammelleitungen, die Sammelleitungen gegenüber dem Hydrauliksteckverbinder fluiddichten.

Die Kollektorsteckverbindung kann ferner eine Dichteinrichtung aufweisen, mittels welcher ein Längsendabschnitt einer Sammelleitung oder der Anschlussabschnitt einer Sammelleitung außen dichtbar und/oder halterbar ist. Hierbei kann die Dichteinrichtung in einer Halterung untergebracht sein, wobei die Halterung einen Abschnitt eines Gehäuses für eine Sammelleitung bildet oder an/in einen Rahmen für ein Kollektormodul an- bzw. einsteckbar ist, wobei die Halterung bevorzugt als ein Eckverbinder ausgebildet ist.

Bevorzugt sitzt die Dichteinrichtung wenigstens auf einem an der Sammelleitung außen als umlaufender Vorsprung ausgebildeten Dichtungssitz außen dichtend an. Ferner kann die Dichteinrichtung zusätzlich oder alternativ abseits des umlaufenden Vorsprungs und benachbart zum umlaufenden Vorsprung außen an der Sammelleitung dichtend ansitzen. Dies kann z. B. ein Bereich der Sammelleitung sein, welcher einen Durchmesser des Mittenabschnitts der Sammelleitung aufweist, wobei dieser Bereich in Längsrichtung vor oder hinter dem eben genannten umlaufenden Vorsprung vorgesehen sein kann. Eine andere Position der Dichteinrichtung gegenüber der Sammelleitung ist natürlich zusätzlich oder alternativ anwendbar.

Der Flansch bzw. die Flansche einer Sammelleitung ist bzw. sind bevorzugt mittels einem nach außen aufgebogenen Material einer Wandung der Sammelleitung ausgebildet. Die jeweilige Dichtsitzeinrichtung der Sammelleitung kann ein, zwei, drei oder mehr Dichtungssitze aufweisen. Ferner kann die Dichtung eines Dichtungssitzes z. B. als eine O-Ringdichtung oder eine Formdichtung ausgebildet sein. Des Weiteren können die zwei Eckverbinder in einem gegenseitigen Verbindungsbereich wenigstens abschnittsweise komplementär ausgebildet sein. D. h. sie sind ineinander ggf. einfach verzahnt.

Die erfindungsgemäße hydraulische Kollektorsteckverbindungsanordnung weist wenigstens zwei hydraulische Kollektorsteckverbindungen, insbesondere zwei erfindungsgemäße Kollektorsteckverbindungen auf, wobei die Kollektorsteckverbindungsanordnung eine einzige Montageklammer umfasst, mittels welcher die wenigstens zwei Kollektorsteckverbindungen mechanisch zusammenspannt sind. Mittels der einzigen Montageklammer können die Montageeinrichtungen der Sammelleitungen einer Seite, die Montageeinrichtungen der Hydrauliksteckverbinder sowie die Montageeinrichtungen der zweiten Sammelleitungen einer anderen Seite mechanisch zusammengehalten bzw. -gespannt sein.

Die Kollektorsteckverbindungsanordnung kann zwei Eckverbinder umfassen, wobei die zwei Eckverbinder in einem gegenseitigen Verbindungsbereich wenigstens abschnittsweise komplementär ausgebildet sein können (Verzahnung). Ferner kann ein Raum zwischen den zwei Eckverbindern für die Kollektorsteckverbindung von einem Deckel oder einer Blende verschließbar sein, wobei der Deckel bzw. die Blende an einem Eckverbinder, den Eckverbindern oder am Gehäuse bzw. Rahmen für ein Kollektormodul mechanisch angebunden sein kann.

Die Montagevorrichtung, insbesondere die Montageklammer, kann derart ausgebildet sein, dass der Deckel bzw. die Blende nur dann vollständig schließbar ist, wenn die Montagevorrichtung, insbesondere die Montageklammer, korrekt über den Sammelleitungen und den Hydrauliksteckverbindern montiert ist. D. h. die Montagevorrichtung, insbesondere die Montageklammer, ist derart ausgebildet, dass der Deckel bzw. die Blende über der Kollektorsteckverbindung bzw. den Kollektorsteckverbindungen nicht vollständig schließbar ist, wenn die Montagevorrichtung nicht korrekt montiert ist, z. B. nicht vollständig übergeschoben oder noch teilweise offen ist.

### Kurzbeschreibung der Zeichnung

Die Erfindung ist im Folgenden anhand von Ausführungsbeispielen einer Ausführungsform einer Variante der Erfindung unter Bezugnahme auf die beigefügte detaillierte und nicht maßstabsgetreue Zeichnung näher erläutert. Elemente, Bauteile oder Komponenten, welche eine identische, univoke oder analoge Ausbildung und/oder Funktion besitzen, sind in der Figurenbeschreibung, der Bezugszeichenliste und den Patentansprüchen mit denselben Bezugszeichen versehen und/oder in den Figuren der Zeichnung mit denselben Bezugszeichen gekennzeichnet. Mögliche, in der Beschreibung nicht erläuterte, in der Zeichnung nicht dargestellte und/oder nicht abschließende Alternativen, statische und/oder kinematische Umkehrungen, Kombinationen etc. zu der dargestellten Ausführungsform und/oder den erläuterten Ausführungsbeispielen der Erfindung bzw. einzelnen Baugruppen, Teilen oder Abschnitten davon, können der Bezugszeichenliste entnommen werden.

Sämtliche erläuterten Merkmale, auch die der Bezugszeichenliste, sind nicht nur in der angegebenen Kombination bzw. den angegebenen Kombinationen, sondern auch in einer anderen Kombination bzw. anderen Kombinationen oder in Alleinstellung anwendbar. Insbesondere ist es möglich, anhand der Bezugszeichen und den diesen zugeordneten Merkmalen in der Beschreibung der Erfindung, der Figurenbeschreibung und/oder der Bezugszeichenliste, ein Merkmal oder eine Mehrzahl von Merkmalen in der Beschreibung der Erfindung und/oder der Figurenbeschreibung zu ersetzen. Ferner kann dadurch ein Merkmal oder können eine Mehrzahl von Merkmalen in den Patentansprüchen ausgelegt, näher spezifiziert und/oder substituiert werden. - In den Figuren (Fig.) der Zeichnung zeigen:
- Fig. 1: in einer Perspektivansicht zwei erfindungsgemäße hydraulische Kollektorsteckverbindungen je zweier erfindungsgemäßer Sammelleitungen, einer erfindungsgemäßen Kollektorsteckverbindungsanordnung;
- Fig. 2: eine zweidimensionale, zentrale Schnittansicht der Kollektorsteckverbindungsanordnung aus Fig. 1 mit zwei erfindungsgemäßen Hydrauliksteckverbindern zur hydraulischen Verbindung je zweier Sammelleitungen; und
- Fig. 3: in einer zweidimensionalen, zentralen Schnittansicht die erfindungsgemäße Sammelleitung für ein Vakuumröhrenkollektormodul, mit einem Fluidanschluss für ein Leitrohr.

### Ausführungsformen der Erfindung

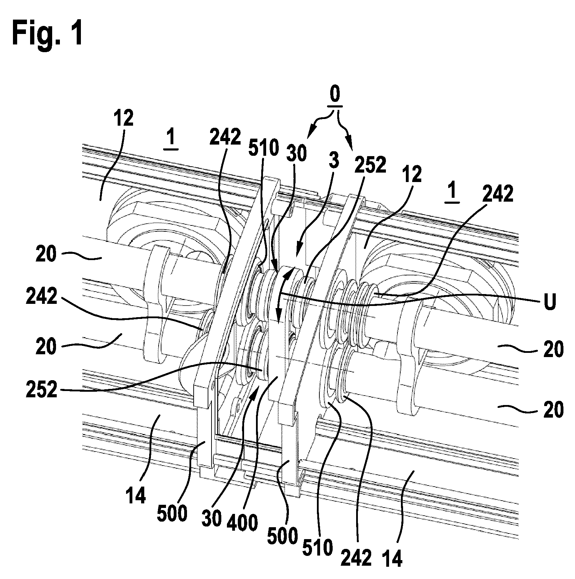

Die Erfindung ist im Folgenden anhand von Ausführungsbeispielen einer Ausführungsform (Fig. 1 bis 3) einer hydraulischen Vakuumröhren-Kollektorsteckverbindung 30 einer Vakuumröhren-Kollektorsteckverbindungsanordnung 3 näher erläutert. Die Erfindung ist jedoch nicht auf eine solche Ausführungsform oder die erläuterten Ausführungsbeispiele beschränkt, sondern ist von grundlegenderer Natur, sodass sie auf sämtliche Kollektorsteckverbindungen bzw. Kollektorsteckverbindungsanordnungen im Sinne der Erfindung angewendet werden kann, wobei ein (Solar-)Kollektor 0 wenigstens ein Kollektormodul 1 mit wenigstens einer thermischen Kollektoreinheit, wie z. B. einer Vakuumröhre, aufweist. - Obwohl die Erfindung im Detail durch bevorzugte Ausführungsbeispiele näher beschrieben und illustriert ist, so ist die Erfindung nicht durch diese offenbarten Beispiele eingeschränkt. Andere Variationen können hieraus abgeleitet werden ohne den Schutzumfang der Erfindung zu verlassen.

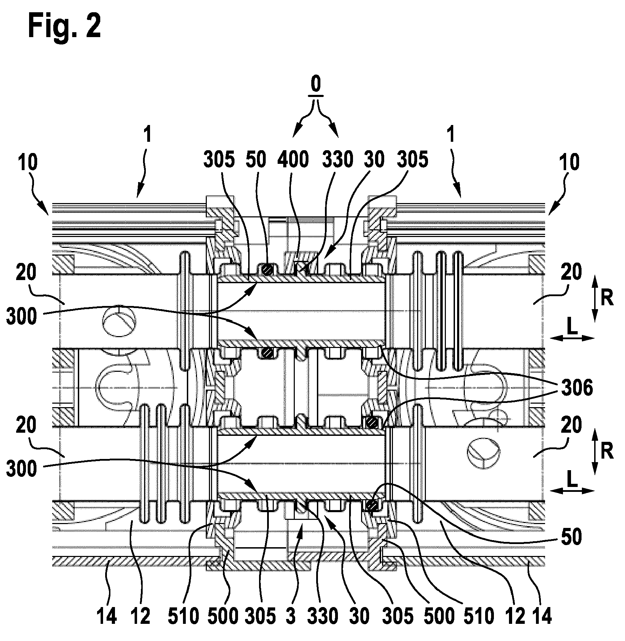

Die Fig. 1 und 2 zeigen eine erfindungsgemäße hydraulische Kollektorsteckverbindungsanordnung 3 mit zwei erfindungsgemäßen hydraulischen Kollektorsteckverbindungen 30. Zunächst wird eine einzelne Kollektorsteckverbindung 30 näher erläutert, wobei das hierzu Gesagte analog auf die zweite Kollektorsteckverbindung 30 übertragbar ist. Die Kollektorsteckverbindung 30 weist einen im Wesentlichen röhrenförmigen Hydrauliksteckverbinder 300 auf, der jeweils längsendabschnittseitig einen im Wesentlichen röhrenförmig ausgestalteten hydraulischen und mechanischen Anschlussabschnitt 305 aufweist. Der jeweilige Anschlussabschnitt 305 kann an seinem freien Ende eine Fase 306 bzw. einen Zentrierbund 306 aufweisen.

In einem vergleichsweise kurzen Mittenabschnitt weist der Hydrauliksteckverbinder 300 eine Montageeinrichtung 330 auf, mittels welcher der Hydrauliksteckverbinder 300 mit einer Sammelleitung 20 mechanisch verbunden werden kann. Hierbei kann die Montageeinrichtung 330 als eine Rasteinrichtung (Haken, Schulter, Ausnehmung etc.), ein Vorsprung, eine Ausnehmung, ein Flansch, ein Außenbund 330 etc. des Hydrauliksteckverbinders 300 ausgebildet sein. Vorliegend ist die Montageeinrichtung 330 als Außenbund 330 ausgebildet, wobei der bevorzugt mittige Außenbund 330 in Umfangsrichtung U des Hydrauliksteckverbinder 300 bevorzugt vollständig umläuft.

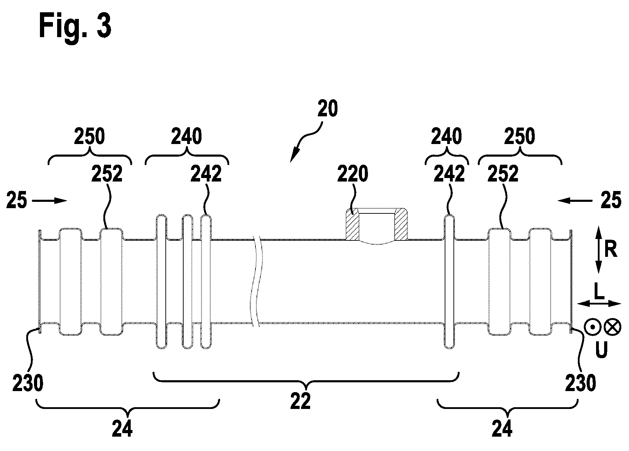

Bei einer eingerichteten Kollektorsteckverbindung 30 sind die beiden sich in Längsrichtung L des Hydrauliksteckverbinders 300 gegenüberliegenden Anschlussabschnitte 305 in zwei einander gegenüberliegende Sammelleitungen 20 eingesteckt. Hierbei können die Sammelleitungen 20 wie weiter unten zu Fig. 3 ausgeführt ausgebildet sein. Zwischen dem jeweiligen Anschlussabschnitt 305 und der jeweiligen Sammelleitung 20 ist wenigstens eine, bevorzugt als eine O-Ringdichtung 50, ausgebildete Dichtung 50 vorgesehen. Hierbei kann die Dichtung 50 in einem Dichtungssitz 252 (siehe unten) der Sammelleitung 20 (Fig. 2 und 3) oder einem Dichtungssitz des jeweiligen Anschlussabschnitts 305 eingerichtet sein (nicht dargestellt).

Für die Kollektorsteckverbindung 30 liegt ein Längsende der einen Sammelleitung 20 an einer Seite der als Außenbund 330 ausgebildeten Montageeinrichtung 330 des Hydrauliksteckverbinders 300 an. Das Längsende der anderen Sammelleitung 20 liegt an einer dieser gegenüberliegenden Seite am Außenbund 330 an. Die Längsenden der beiden Sammelleitungen 20 sind derart ausgebildet, dass sie mit der Montageeinrichtung 330, insbesondere dem Außenbund 330, mechanisch zusammengehalten werden können. Hierfür können die Längsenden der beiden Sammelleitungen 20 als Montageeinrichtungen 230, insbesondere als Flansche 230 ausgebildet sein (siehe unten).

Für die mechanische Verbindung der beiden Sammelleitungen 20 liegen der Flansch 230 der einen Sammelleitung 20, der Außenbund 330 des Hydrauliksteckverbinders 300 und der Flansch 230 der anderen Sammelleitung 20 im Wesentlichen direkt aneinander an, wobei über diese Anordnung 230, 330, 230 eine Montagevorrichtung 400, insbesondere eine Montageklammer 400, schiebbar und/oder verrastbar ist, wobei die Montagevorrichtung 400 bzw. die Montageklammer 400 diese Anordnung 230, 330, 230 mechanisch zusammenhält bzw. -spannt. Andere Möglichkeiten des mechanischen Zusammenhalts dieser oder einer anderen Anordnung 230, 330, 230 sind natürlich anwendbar.

Vorliegend umfasst die Kollektorsteckverbindungsanordnung 3 zwei im Wesentlichen parallel angeordnete Kollektorsteckverbindungen 30. Hierbei sind die beiden Anordnungen 230, 330, 230 von den Flanschen 230 der Sammelleitungen 20 einer Seite, der Außenbunde 330 der Hydrauliksteckverbinder 300 und den Flanschen 230 der anderen Sammelleitungen 20 der anderen Seite, im Wesentlichen übereinander angeordnet. Mittels einer einzigen, gemeinsamen Montagevorrichtung 400, insbesondere einer Montageklammer 400, ist die jeweilige Anordnung 230, 330, 230 mechanisch zusammengehalten bzw. -gespannt, wobei beide Anordnungen 230, 330, 230 zugleich mechanisch zusammengehalten bzw. -gespannt sind.

Die Montageklammer 400 kann als im Wesentlichen u-förmige oder im Wesentlichen o-förmige Montageklammer 400 ausgebildet sein, wobei die Montageklammer 400 über die beiden Anordnungen 230, 330, 230 schiebbar (U-Form) oder über den beiden Anordnungen 230, 330, 230 montierbar (O-Form) ist, wobei z. B. zwei gegeneinander bewegbare, insbesondere verschwenkbare, Schenkel der Montageklammer 400 über den beiden Anordnungen 230, 330, 230 verrasten können. Es ist natürlich möglich, dies auf eine einzelne Kollektorsteckverbindung 30 als Kollektorsteckverbindungsanordnung 3 zu übertragen.

Mittels der angeformten Enden (Flansche 230) der Sammelleitungen 20 ist es möglich, eine einfache Verbindungstechnik für die Sammelleitungen 20 zu wählen. Die beiden Sammelleitungen 20 werden dabei mit Hilfe eines Steckverbinders 30 hydraulisch verbunden. Eine axial fluchtende Position der Sammelleitungen 20 zueinander kann mittels einer Gestaltung von als Eckverbindern 500 ausgebildeten Halterungen 500 der zwei beteiligten Kollektormodule 1 vorgegeben werden. Ein jeweiliger Eckverbinder 500 ist dabei zwischen einem Halter 12 bzw. Halterblech 12 und einem Träger 14 bzw. Trägerblech 14 eines Gehäuses 10 für die Sammelleitungen 20 des betreffenden Kollektormoduls 1 vorgesehen, insbesondere verrastet.

Der jeweilige Eckverbinder 500 weist in einer Durchgangsausnehmung eine Dichteinrichtung 510 bzw. eine Dichtung 510 auf, in welcher die betreffende Sammelleitung 20 lagerbar ist. Die Dichteinrichtung 510 dichtet dabei die betreffende Sammelleitung 20 außen gegen ein Eindringen von Schmutz und/oder (Regen-)Wasser) in das Gehäuse 10 ab. Statt einer einzeln Dichteinrichtung 510 je Sammelleitung 20 können auch Doppeldichtungen 510 für beide Sammelleitungen 20 eines Eckverbinders 500 angewendet sein. Die Dichteinrichtung 510 dichtet die betreffende Sammelleitung 20 bevorzugt außen an ihrer Dichtsitzeinrichtung 250 bzw. einem Dichtungssitz 252 der Dichtsitzeinrichtung 250 ab (siehe unten).

Bevorzugt ist der Raum zwischen den beiden Eckverbindern 500 mittels einem Deckel oder einer Blende verschließbar. Zusätzlich kann hier eine Schutzfunktion berücksichtigt sein, wenn die Montageklammer 400 nicht ordnungsgemäß montiert wurde. In einem solchen Fall kann der Deckel bzw. die Blende nicht mehr vollständig geschlossen werden. D. h. der Deckel bzw. die Blende können nur vollständig geschlossen werden, wenn die Montageklammer 400 ordnungsgemäß montiert ist. - An denjenigen Bereichen, an welchen die beiden Eckverbinder 500 aneinander anstoßen, sind die Eckverbinder 500 insbesondere komplementär, z. B. in Form einer einfachen (Stufen-)Verzahnung, ausgebildet.

Eine Ausführungsform der erfindungsgemäßen Vakuumröhrenkollektor-Sammelleitung 20 (siehe Fig. 3) umfasst einen langgestreckten Mittenabschnitt 22 und wenigstens einen sich daran in Längsrichtung L der Sammelleitung 20 anschließenden Längsendabschnitt 24, welcher längsendseitig einen Anschlussabschnitt 25 aufweist, wobei der Mittenabschnitt 22 integral mit dem Längsendabschnitt 24 und der Längsendabschnitt 24 integral mit dem Anschlussabschnitt 25 ausgebildet, insbesondere ausgeformt, ist.

D. h. gemäß der Erfindung sind der Mittenabschnitt 22, der Längsendabschnitt 24 und der Anschlussabschnitt 25 der Sammelleitung 20 stofflich einstückig zusammengehalten, wobei die Sammelleitung 20 bevorzugt aus einem einzigen Ursprungsstück gefertigt ist, das bevorzugt seinerseits stofflich einstückig oder integral ausgebildet ist. D. h. die Sammelleitung 20 weißt in ihren Längsendabschnitten 24 keine Schweiß- oder Lötnaht. Ferner weist die Sammelleitung 20 kein Gewinde auf. Der Anschlussabschnitt 25 kann eine darin vorgesehene, insbesondere eine darin ausgeformte, Dichtsitzeinrichtung 250 zur inneren Aufnahme einer Dichtung 50 aufweisen, und/oder der Längsendabschnitt 24 oder der Mittenabschnitt 22 kann eine darin vorgesehene, insbesondere eine darin ausgeformte, Thermokompensationseinrichtung 240 aufweisen.

Eine weitere Ausführungsform der erfindungsgemäßen VakuumröhrenkollektorSammelleitung 20 (siehe wiederum Fig. 3) umfasst ebenfalls einen langgestreckten Mittenabschnitt 22 und wenigstens einen sich daran in Längsrichtung L der Sammelleitung 20 anschließenden Längsendabschnitt 24, welcher längsendseitig einen Anschlussabschnitt 25 aufweist, wobei der Anschlussabschnitt 25 eine darin vorgesehene, insbesondere eine darin ausgeformte, Dichtsitzeinrichtung 250 zur inneren Aufnahme einer Dichtung 50 aufweist, und/oder der Längsendabschnitt 24 oder der Mittenabschnitt 22 eine darin vorgesehene, insbesondere eine darin ausgeformte, Thermokompensationseinrichtung 240 aufweist. Hierbei kann der Mittenabschnitt 22 integral mit dem Längsendabschnitt 24 und der Längsendabschnitt 24 integral mit dem Anschlussabschnitt 25 ausgebildet, insbesondere ausgeformt, sein. Es ist natürlich möglich, die Sammelleitung 20 mehrteilig auszubilden, wobei z. B. die Dichtungssitze angelötet sind.

Gemäß der Erfindung kann die Dichtsitzeinrichtung 250 wenigstens einen Dichtungssitz 252 aufweisen, wobei der Dichtungssitz 252 als eine in der Sammelleitung 20 vollständig umlaufende Innennut 252 ausgebildet ist. Die Innennut 252 ist außen an der Sammelleitung 20 bevorzugt als ein umlaufender Vorsprung 252 ausgebildet. Eine Tiefe der Innennut 252 in Radialrichtung R der Sammelleitung 10 kann hauptsächlich oder im Wesentlichen einer Breite der Innennut 252 in Längsrichtung L entsprechen. Hierbei kann eine einzelne Dichtsitzeinrichtung 250 ein, zwei, drei oder ggf. mehr Dichtungssitze 252 aufweisen. Eine Dichtung 50 für einen Dichtungssitz 252 ist bevorzugt als eine O-Ringdichtung 50 ausgebildet. Eine andere Dichtung 50 ist natürlich anwendbar.

Gemäß der Erfindung kann die Thermokompensationseinrichtung 240 einem Aufnehmen einer thermischen Ausdehnung der Sammelleitung 20 dienen, wobei die Thermokompensationseinrichtung 240 bevorzugt bogenfaltenartig oder bevorzugt faltenbalgartig aus einer Wandung der Sammelleitung 20 herausgeformt ist und um die Sammelleitung 20 vollständig herumläuft. Eine Ausbildung in Lyraform ebenfalls anwendbar. Die Thermokompensationseinrichtung 240 kann wenigstens eine Thermokompensationsvorrichtung 242 aufweisen. Bevorzugt sind dabei sich radial erstreckende Umfangsseiten einer Thermokompensationsvorrichtung 242 im Wesentlichen parallel angeordnet. Ein bevorzugt spitzer Winkel der Umfangsseiten zueinander ist natürlich anwendbar.

Die Thermokompensationsvorrichtung 242 kann dabei als eine in der Sammelleitung 20 vollständig umlaufende Innenspalte 242 ausgebildet sein, wobei die Innenspalte 242 außen an der Sammelleitung 20 bevorzugt als ein umlaufender Vorsprung 242 ausgebildet ist. Ferner kann insbesondere eine Tiefe der Innenspalte 242 in Radialrichtung R größer sein, bevorzugt im Wesentlichen um mehr als ein doppeltes oder im Wesentlichen um mehr als ein dreifaches größer sein, als eine Breite der Innenspalte 242 in Längsrichtung L der Sammelleitung 20. Generell wird eine Anzahl und eine Form der Thermokompensationsvorrichtungen 242 entsprechend der Toleranzen (axiale und/oder laterale Wärmedehnung) ausgelegt.

Eine Thermokompensationsvorrichtung 242 in der Sammelleitung 20 kann tiefer als ein Dichtungssitz 252 eingerichtet sein, d. h. ein Radius der Sammelleitung 20 im Bereich einer Thermokompensationsvorrichtung 242 ist dabei größer als ein Radius der Sammelleitung 20 im Bereich eines Dichtungssitzes 252. Eine einzelne Thermokompensationseinrichtung 240 kann eine, zwei, drei, vier oder ggf. eine Vielzahl von Thermokompensationsvorrichtungen 242 besitzen. Ferner kann ein Längsendabschnitt 24 der Sammelleitung 20 eine einzige oder zwei Thermokompensationsvorrichtungen 242 und der andere Längsendabschnitt 24 dieser Sammelleitung 20 zwei, drei oder vier Thermokompensationsvorrichtungen 242 aufweisen.

Beide Längsendabschnitte 24 einer Sammelleitung 20 können in ihren betreffenden Anschlussabschnitten 25 jeweils zwei Dichtungssitze 252 aufweisen. Ferner können beide Längsendabschnitte 24 einer Sammelleitung 20 benachbart zu ihren Anschlussabschnitten 25 jeweils eine Thermokompensationseinrichtung 240 aufweisen, wobei bevorzugt eine Thermokompensationseinrichtung 240 mehr Thermokompensationsvorrichtungen 242 als die andere Thermokompensationseinrichtung 240 aufweist. Natürlich ist es möglich, hier auf beiden Seiten die gleiche Anzahl an Thermokompensationsvorrichtungen 242 vorzusehen. Ferner ist es alternativ oder zusätzlich möglich, im Mittenabschnitt 22 der Sammelleitung 20 eine Thermokompensationseinrichtung 240 einzurichten.

Gemäß der Erfindung kann die Sammelleitung 20 an beiden Längsendabschnitten 24 jeweils einen Anschlussabschnitt 25 aufweisen. Ferner kann der Mittenabschnitt 22 der Sammelleitung 20 als ein Leitrohrabschnitt 22 oder ein Wärmerohrabschnitt 22 ausgebildet sein. Des Weiteren kann der Anschlussabschnitt 25 als ein mechanischer und/oder hydraulischer Anschlussabschnitt 25 ausgebildet sein. Darüber hinaus kann der Mittenabschnitt 22 einen einzigen Leitrohranschluss 220 oder eine Vielzahl von Leitrohranschlüssen 220 aufweisen.

Hierbei kann der erfindungsgemäße Kollektor 0, insbesondere der erfindungsgemäße Vakuumröhrenkollektor 0, die erfindungsgemäße Kollektoranlage oder das erfindungsgemäße Thermosystem eine erfindungsgemäße Sammelleitung 20, eine erfindungsgemäße hydraulische Kollektorsteckverbindung 30 und/oder eine erfindungsgemäße hydraulische Kollektorsteckverbindungsanordnung 3 aufweisen.

### Bezugszeichenliste

- 0: (thermischer) (Vakuumröhren-)Kollektor mit einem oder einer Mehrzahl von (Vakuumröhren-)Kollektormodulen 1, (Solar-)Kollektor
- 1: (thermisches) (Vakuumröhren-)Kollektormodul, Solarmodul
- 3: hydraulische Kollektorsteckverbindungsanordnung, Vakuumröhren-Kollektorsteckverbindungsanordnung

- 10: Gehäuse für Sammelleitung 20, Rahmen für (Vakuumröhren-)Kollektormodul 1
- 12: Halter, Halterblech, bevorzugt aus Aluminium
- 14: Träger, Trägerblech, bevorzugt aus Aluminium, u. a. für Halterung 500, Deckel/Blende (bevorzugt aus Aluminium), etc.
- 20: (Vakuumröhrenkollektor-)Sammelleitung, im Wesentlichen röhrenförmig
- 22: Mittenabschnitt der Sammelleitung 20, Leitrohrabschnitt, Wärmerohrabschnitt, im Wesentlichen röhrenförmig
- 24: Längsendabschnitt der Sammelleitung 20, im Wesentlichen röhrenförmig
- 25: hydraulischer und/oder mechanischer Anschlussabschnitt der Sammelleitung 20 bzw. des Längsendabschnitts 24, im Wesentlichen röhrenförmig
- 30: Hydraulische (Vakuumröhren-)Kollektorsteckverbindung
- 50: Dichtung, insbesondere O-Ringdichtung, Formdichtung

- 220: Leitrohranschluss der Sammelleitung 20
- 230: Montageeinrichtung, Rasteinrichtung (Haken, Schulter, Ausnehmung etc.), Vorsprung, Ausnehmung, Flansch, Außenbund der Sammelleitung 20
- 240: Thermokompensationseinrichtung der Sammelleitung 20
- 242: Thermokompensationsvorrichtung, Innenspalte, Innennut (bevorzugt Tiefe > Breite); umlaufender Vorsprung, Bund (von außen betrachtet) der Thermokompensationseinrichtung 240
- 250: Dichtsitzeinrichtung der Sammelleitung 20
- 252: Dichtungssitz, Innennut (bevorzugt Tiefe ≈ Breite); umlaufender Vorsprung, Bund (von außen betrachtet) der Dichtsitzeinrichtung 250
- 300: (Hydraulik-)Steckverbinder, im Wesentlichen röhrenförmig
- 305: hydraulischer und mechanischer Anschlussabschnitt des Hydrauliksteckverbinders 300, im Wesentlichen röhrenförmig
- 306: Fase Zentrierbund
- 330: Montageeinrichtung, Rasteinrichtung (Haken, Schulter, Ausnehmung etc.), Vorsprung, Ausnehmung, Flansch, Außenbund des Hydrauliksteckverbinders 300
- 400: Montagevorrichtung, Montageklammer
- 500: Halterung, Eckverbinder, bevorzugt aus Kunststoff oder Aluminium
- 510: Dichteinrichtung, Dichtung, ggf. Doppeldichtung

- L: Längsrichtung, Axialrichtung der Sammelleitung 20, der Kollektorsteckverbindung 30, axial
- R: Radialrichtung der Sammelleitung 20, der Kollektorsteckverbindung 30, radial
- U: Umfangsrichtung der Sammelleitung 20, der Kollektorsteckverbindung 30, der Kollektorsteckverbindungsanordnung 3, tangential

## Patentansprüche

1. Hydraulische Kollektorsteckverbindung (30), bevorzugt Vakuumröhren-Kollektorsteckverbindung (30), für einen Kollektor (0) einer Kollektoranlage, mit
einem Hydrauliksteckverbinder (300) zur hydraulischen Verbindung zweier Sammelleitungen (20), insbesondere von Kollektormodulen (1), **dadurch gekennzeichnet, dass**
der Hydrauliksteckverbinder (300) zwei längsendabschnittsseitige Anschlussabschnitte (305) aufweist, welche innerhalb zweier einander gegenüberliegender Sammelleitungen (20) vorgesehen, insbesondere eingesteckt, sind.

2. Hydraulische Kollektorsteckverbindung (30) gemäß vorhergehendem Anspruch, **dadurch gekennzeichnet, dass** die beiden Sammelleitungen (20) an ihren einander gegenüberliegenden Enden jeweils eine Montageeinrichtung (230) aufweisen, welche mit einer Montageeinrichtung (330) des Hydrauliksteckverbinders (300) verbunden sind, und/oder
die Kollektorsteckverbindung (30) ferner eine Montagevorrichtung (400) umfasst, welche die Montageeinrichtung (230) der einen Sammelleitung (20), die Montageeinrichtung (330) des Hydrauliksteckverbinders (300) sowie die Montageeinrichtung (230) der zweiten Sammelleitung (20) mechanisch fest verbindet.

3. Hydraulische Kollektorsteckverbindung (30) gemäß einem der vorhergehenden Ansprüche, **dadurch gekennzeichnet, dass** die beiden Sammelleitungen (20) an ihren einander gegenüberliegenden Enden jeweils einen Flansch (230) aufweisen, zwischen welchen ein Außenbund (330) des Hydrauliksteckverbinders (300) aufgenommen ist, und/oder
die Kollektorsteckverbindung (30) ferner eine Montageklammer (400) umfasst, mittels welcher der Flansch (230) der einen Sammelleitung (20), der Außenbund (330) des Hydrauliksteckverbinders (300) sowie der Flansch (230) der zweiten Sammelleitung (20) mechanisch zusammenspannt sind.

4. Hydraulische Kollektorsteckverbindung (30) gemäß einem der vorhergehenden Ansprüche, **dadurch gekennzeichnet, dass** die Montageklammer (400) als eine im Wesentlichen u-förmige und/oder im Wesentlichen starre Montageklammer (400) ausgebildet ist, welche über die Montageeinrichtungen (230, 330, 230; 230, 330, 230) schiebbar ist und mittels zweier bevorzugt innenliegender Seiten die betreffenden Montageeinrichtungen (230, 330, 230; 230, 330, 230) axial zusammenhält, oder
die Montageklammer (400) als eine im Wesentlichen o-förmige Montageklammer (400) mit zwei gegeneinander bewegbaren, insbesondere schwenkbaren, und miteinander verrastbaren Schenkeln, ausgebildet ist, welche über den Montageeinrichtungen (230, 330, 230; 230, 330, 230) montierbar ist und mittels zweier bevorzugt innenliegender Seiten die betreffenden Montageeinrichtungen (230, 330, 230; 230, 330, 230) axial zusammenhält.

5. Hydraulische Kollektorsteckverbindung (30) gemäß einem der vorhergehenden Ansprüche, **dadurch gekennzeichnet, dass** die Sammelleitungen (20) in jeweils einem Anschlussabschnitt (25) eine darin vorgesehene, insbesondere eine darin ausgeformte, Dichtsitzeinrichtung (250) zur inneren Aufnahme jeweils einer Dichtung (50) aufweisen, wobei
die jeweilige Dichtsitzeinrichtung (250) bevorzugt wenigstens einen Dichtungssitz (252) zur inneren Aufnahme der Dichtung (50) aufweist, der als eine in der betreffenden Sammelleitung (20) vollständig umlaufende Innennut (252) ausgebildet ist, und die Innennut (252) außen an der Sammelleitung (20) bevorzugt als ein umlaufender Vorsprung (252) ausgebildet ist, und/oder
die Anschlussabschnitte (305) des Hydrauliksteckverbinders (300) bevorzugt in die Anschlussabschnitte (25) der Sammelleitungen (20) eingesteckt sind und die Dichtungen (50) der Dichtsitzeinrichtungen (250) bzw. der Dichtungssitze (252) der Sammelleitungen (20), die Sammelleitungen (20) gegenüber dem Hydrauliksteckverbinder (300) fluiddichten.

6. Hydraulische Kollektorsteckverbindung (30) gemäß einem der vorhergehenden Ansprüche, **dadurch gekennzeichnet, dass** die Kollektorsteckverbindung (30) ferner eine Dichteinrichtung (510) aufweist, mittels welcher ein Längsendabschnitt (24) oder der Anschlussabschnitt (25) einer Sammelleitung 20 außen dichtbar und/oder halterbar ist, wobei
die Dichteinrichtung (510) bevorzugt in einer Halterung (500) untergebracht ist, und die Halterung (500) einen Abschnitt eines Gehäuses (10) für eine Sammelleitung (20) bildet oder an/in einen Rahmen (10) für ein Kollektormodul (1) anbzw. einsteckbar ist, wobei die Halterung (500) bevorzugt als ein Eckverbinder (500) ausgebildet ist.

7. Hydraulische Kollektorsteckverbindung (30) gemäß einem der vorhergehenden Ansprüche, **dadurch gekennzeichnet, dass**:
• der Hydrauliksteckverbinder (300) ferner einer mechanischen Verbindung der beiden Sammelleitungen (20) dient;
• die Sammelleitungen (20) als Vakuumröhrenkollektor-Sammelleitungen (20) ausgebildet sind;
• ein Mittenabschnitt (22) einer Sammelleitung (20) als ein Leitrohrabschnitt (22) oder ein Wärmerohrabschnitt (22) ausgebildet ist;
• die Anschlussabschnitte (305) des Hydrauliksteckverbinders (300) innen im Wesentlichen miteinander fluchten;
• ein Anschlussabschnitt (305) des Hydrauliksteckverbinders (300) an seinem freien Ende eine Fase oder einen Zentrierbund aufweist;
• der Flansch (230) einer Sammelleitung (20) mittels einem nach außen aufgebogenen Material einer Wandung der Sammelleitung (20) ausgebildet ist;
• die jeweilige Dichtsitzeinrichtung (250) der Sammelleitung (20) ein, zwei oder drei Dichtungssitze (252) aufweist;
• die Dichtung (50) eines Dichtungssitzes (252) als eine O-Ringdichtung oder eine Formdichtung (50) ausgebildet ist; und/oder
• die zwei Eckverbinder (500) in einem gegenseitigen Verbindungsbereich wenigstens abschnittsweise komplementär ausgebildet sind.

8. Hydraulische Kollektorsteckverbindungsanordnung (3), bevorzugt Vakuumröhren-Kollektorsteckverbindungsanordnung (3) für einen Vakuumröhrenkollektor (0) einer Vakuumröhrenkollektoranlage, mit
wenigstens zwei hydraulischen Kollektorsteckverbindungen (30), insbesondere zwei Kollektorsteckverbindungen (30) gemäß einem der vorhergehenden Ansprüche, **dadurch gekennzeichnet, dass**
die Kollektorsteckverbindungsanordnung (3) eine einzige Montageklammer (400) umfasst, mittels welcher die wenigstens zwei Kollektorsteckverbindungen (30) mechanisch zusammenspannt sind.

9. Hydraulische Kollektorsteckverbindungsanordnung (3) gemäß vorhergehendem Anspruch, **dadurch gekennzeichnet, dass** mittels der einzigen Montageklammer (400) die Montageeinrichtungen (230) der Sammelleitungen (20) einer Seite, die Montageeinrichtungen (330) der Hydrauliksteckverbinder (300) sowie die Montageeinrichtungen (230) der zweiten Sammelleitungen (20) einer anderen Seite mechanisch zusammenspannt sind.

10. Hydraulische Kollektorsteckverbindungsanordnung (3) gemäß einem der vorhergehenden Ansprüche, **dadurch gekennzeichnet, dass** die Kollektorsteckverbindungsanordnung (3) zwei Eckverbinder (500) umfasst, wobei die zwei Eckverbinder (500) in einem gegenseitigen Verbindungsbereich wenigstens abschnittsweise komplementär ausgebildet sind, und
bevorzugt ein Raum zwischen den zwei Eckverbindern (500) für die Kollektorsteckverbindung (30) von einem Deckel oder einer Blende verschließbar ist, wobei der Deckel bzw. die Blende an einem Eckverbinder (500), den Eckverbindern (500) oder am Gehäuse (10) bzw. Rahmen (10) für ein Kollektormodul (1) mechanisch angebunden ist.

11. Hydraulische Kollektorsteckverbindungsanordnung (3) gemäß einem der vorhergehenden Ansprüche, **dadurch gekennzeichnet, dass** die Montagevorrichtung (400), insbesondere die Montageklammer (400), derart ausgebildet ist, dass der Deckel bzw. die Blende nur dann vollständig schließbar ist, wenn die Montagevorrichtung (400), insbesondere die Montageklammer (400), korrekt über den Sammelleitungen (20) und den Hydrauliksteckverbindern (300) montiert ist.

12. Kollektor (0), insbesondere Vakuumröhrenkollektor (0), Kollektoranlage oder Thermosystem zur Wärmeerzeugung, z. B. für eine Warmwasserbereitung und/oder eine Heizungsunterstützung, **dadurch gekennzeichnet, dass**
der Kollektor (0), insbesondere der Vakuumröhrenkollektor (0), die Kollektoranlage oder das Thermosystem eine Kollektorsteckverbindung (30) gemäß einem der vorhergehenden Ansprüche aufweist, und/oder
der Kollektor (0), insbesondere der Vakuumröhrenkollektor (0), die Kollektoranlage oder das Thermosystem eine Kollektorsteckverbindungsanordnung (3) gemäß einem der vorhergehenden Ansprüche aufweist.
